# EUROPÄISCHE PATENTANMELDUNG

(11) **EP 1 748 260 A1**
(43) Veröffentlichungstag der Anmeldung: **31.01.2007**
(21) Anmeldenummer: 05106803.9
(22) Anmeldetag: 25.07.2005
(51) Int. Cl.: F24F 5/00, F24F 12/00

(54) **Verfahren zur Kühlung eines Luftstromes**

(71) Anmelder: Imes Management AG, 6330 Cham (CH)
(72) Erfinder: Weidmann, Urs A., 6330 Cham (CH)
(74) Vertreter: Liebetanz, Michael

(57) **Zusammenfassung**

Ein Verfahren zur Kühlung eines ersten Luftstromes (50,50',50",51) setzt die Verfahrensschritte des Entfeuchten eines zweiten Luftstromes (55,55',55",56) des Einspritzens von Wasser in den entfeuchteten Luftstrom zur Kühlung des zweiten Luftstromes und des Durchführen des ersten und des gekühlten zweiten Luftstromes durch einen Wärmetauscher (40) zur Kühlung des ersten Luftstromes ein. Dabei wird das beim Entfeuchten des zweiten und/oder ersten Luftstromes gewonnene Kondensat beim Einspritzen verwendet.

## Beschreibung

### Technisches Gebiet der Erfindung

Die vorliegende Erfindung betrifft eine Vorrichtung zur Kühlung eines Luftstromes und weist die Merkmale des Oberbegriffs des Anspruchs 1 auf.

### Stand der Technik

Entfeuchtungssysteme sind in der Haustechnik bekannt. Dabei kann eine Vorrichtung, wie in EP 1 521 040 offenbart, eingesetzt werden. Aus einem, in einem ersten Hohlraum hindurch fliessenden Luftstrom, wird durch eine wasser- und/oder wasserdampfpermeablen Membran Feuchtigkeit entzogen. Vor dem Wärmeaustausch mit dem zu kühlendem Luftstrom und dem entfeuchteten Abluftstrom wird in dieser Abluft sodann eine Flüssigkeit hinzugegeben und verdunstet, um die Temperatur des Abluftstroms vor dem Wärmetauscher zu senken (Verdunstungskühlung).

EP 0 959 307 offenbart einen Sorptions-Plattewärmetauscher, dessen verdünntes Sorptionsmittel mittels einem aufwändigen Verfahren aufgefangen, aufbereitet (Desorption durch Erwärmen und anschliessende Kühlung) und dann dem Plattenwärmetauscher wieder zugeleitet wird.

### Darstellung der Erfindung

Ausgehend von diesem Stand der Technik liegt der Erfindung die Aufgabe zugrunde, eine Vorrichtung der eingangs genannten Art derart zu verbessern, dass diese einen ganz oder teilweise autarken Betrieb der Vorrichtung ermöglicht.

Diese Aufgabe wird durch eine Vorrichtung mit den Merkmalen des Anspruchs 1 und des Anspruchs 4 gelöst.

Demgemäss weist ein Verfahren zur Kühlung eines ersten Luftstromes die Verfahrensschritte des Entfeuchtens eines zweiten Luftstromes, des Einspritzens von Wasser in den entfeuchteten Luftstrom zur Kühlung des zweiten Luftstromes und des Durchführens des ersten und des gekühlten zweiten Luftstromes durch einen Wärmetauscher zur Kühlung des ersten Luftstromes auf. Beim Entfeuchten des zweiten Luftstromes wird Kondensat gewonnen, welches beim Einspritzen wieder verwendet wird.

Das Einspritzen umfasst aufgrund der physikalischen Gegebenheiten ein Verdunsten des eingespritzten Wassers.

Um die Autarkie zu erhöhen, insbesondere bei mobilen Anlagen, besteht eine zusätzliche Möglichkeit darin, dass weiteres Kondensat zum Einspritzen durch ein Entfeuchten von freier Umgebungsluft gewonnen wird.

Eine erfindungsgemässe Vorrichtung zur Kühlung eines ersten Luftstromes umfasst eine Luft-Entfeuchtevorrichtung für mindestens einen zweiten Luftstrom mit einer wasser- und/oder wasserdampfpermeablen Struktur, die über Pumpenmittel mit einem Kondensatabscheider verbunden ist, ein Kühlsystem, durch das der entfeuchtete zweite Luftstrom durchführbar ist, und einen Wärmetauscher, durch den die beiden Luftströme zur Abkühlung des ersten Luftstromes hindurchführbar sind. Das aus dem Kondensatabscheider gewonnene Wasser wird zum Einspritzen (Verdunsten) in das Kühlsystem geführt.

Bei einer weiteren Luft-Entfeuchtevorrichtung der erfindungsgemässen Vorrichtung kann weiteres Kondensat aus dem gekühlten ersten Luftstrom gewonnen werden.

Mit einer zusätzlichen Luft-Entfeuchtevorrichtung kann weiteres Kondensat aus der Umgebungsluft gewonnen werden.

Die zusätzliche Vorrichtung kann auf einem Fahrzeug angeordnet werden. Der Luftstrom wird dabei entlang der zusätzlichen Luft-Entfeuchtevorrichtung durch ein Bewegen des Fahrzeuges erzeugt.

Das Fahrzeug ist vorzugsweise ein Kraftfahrzeug oder ein Anhänger eines Kraftfahrzeuges, besonders bevorzugt ein Wohnmobil, ein Wohnwagen, ein Lastkraftfahrzeug, ein Anhänger, ein Schiff oder ein Flugzeug ist.

### Kurze Beschreibung der Zeichnung

Die Erfindung wird im folgenden anhand der Zeichnung näher beschrieben. Es zeigt:

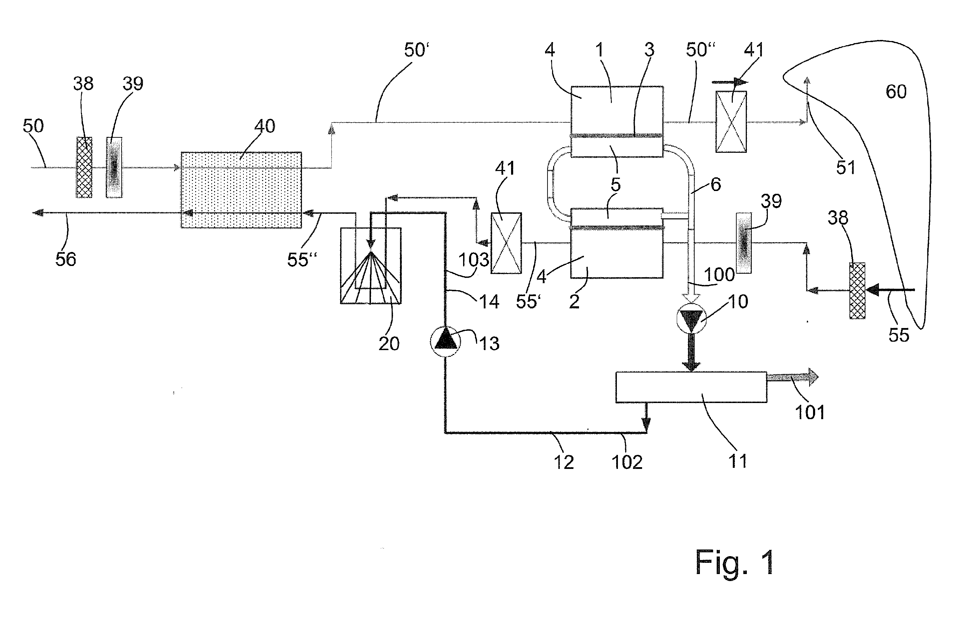

- Fig. 1: eine schematische Darstellung eines Ausführungsbeispiels der vorliegenden Erfindung.

### Beschreibung eines Ausführungsbeispiels

Die Fig. 1 zeigt in einer schematischen Darstellung eine Vorrichtung gemäss der vorliegenden Erfindung. Die Funktion der erfindungsgemässen Vorrichtung wird anhand dieser schematischen Darstellung erläutert. Die Vorrichtung zum Kühlen von Raumluft verfügt über eine Vielzahl von einzelnen Gerätschaften, die dem Fachmann bekannt sind, so dass auf diese hier nicht im Detail eingegangen wird.

In einem als ersten Luftstrom bezeichneten Luftstrom, wird Aussenluft 50 durch diverse Elemente als Zuluft 51 in einen Raum 60 geführt. Die Aussenluft 50, welche im Sommer häufig eine Wünschenswerterweise abzusenkende Aussentemperatur aufweist, wird typischerweise durch einen Grobpartikelfilter 38 und/oder einen Elektrofilter 39 in einen Wärmetauscher 40 geführt, der Wärmetauscher kann zum Beispiel als Plattenwärmetauscher nach WO 2004/085946 ausgeführt sein. Im Wärmetauscher 40 erfährt die Aussenluft 50 eine Abkühlung durch den vorteilhafterweise im Gegenstrom geführten gekühlten Luftstrom 55" und tritt als gekühlter Luftstrom 50' wieder aus. Weiter wird der gekühlte Luftstrom 50' vorteilhafterweise in eine erste Luft-Entfeuchtevorrichtung 1 geführt. In dieser ersten Luft-Entfeuchtevorrichtung 1 wird dem gekühlten Luftstrom 50', der nun gegenüber der wärmeren Aussenluft 50 eine höhere relative Luftfeuchtigkeit aufweist, Feuchtigkeit entzogen und der gekühlte Luftstrom 50' tritt als gekühlter und entfeuchteter Luftstrom 50" wieder aus der Luft-Entfeuchtevorrichtung 1 aus. Durch einen Ventilator 41 wird der gekühlte und entfeuchtete Luftstrom 50" als Zuluft 51 einem vorteilhafterweise geschlossenen Raum 60 zugeführt, in welchem die gewünschten klimatischen Bedingungen hergestellt werden. Demnach weist die Zuluft 51 eine tiefere Temperatur auf, als die Aussenluft 50.

In einem als zweiten Luftstrom bezeichneten Luftstrom, wird Abluft 55 aus einem Raum 60 durch diverse nachstehend zu beschreibende Elemente als Fortluft 56 der Umgebung abgegeben. Die Abluft 55, welche eine Innen-Raumtemperatur aufweist, wird aus dem geschlossenen Raum 60 typischerweise durch einen Grobpartikelfilter 38 und/oder einen Elektrofilter 39 geführt. Die Abluft 55 tritt in eine zweite Luft-Entfeuchtevorrichtung 2 ein und verlässt diese als entfeuchteter Luftstrom 55'. Mittels einem Ventilator 41 wird der entfeuchtete Luftstrom 55' einem Kühlsystem 20 zugeführt. Im Kühlsystem wird der entfeuchtete Luftstrom 55' gekühlt. Damit tritt ein gekühlter Luftstrom 55" aus dem Kühlsystem wieder aus. Im Wärmetauscher 40 findet ein Wärmetausch zwischen dem gekühlten Luftstrom 55" und der warmen Aussenluft 50 statt. Nach erfolgtem Wärmetausch verlässt der jetzt wärmere, vormals gekühlte Luftstrom 55" den Wärmetauscher als Abluft 56, die dann an die Umgebung abgegeben wird.

Die zwei Luft-Entfeuchtevorrichtungen 1,2 können gemäss der EP 1 521 040 oder einer vergleichbaren Vorrichtung ausgeführt sein. Die Luft-Entfeuchtevorrichtungen 1,2 umfassen beispielsweise einen jeweils ersten Hohlraum 4, welcher mittels einer wasser- und/oder wasserdampfpermeablen Membran 3 von einem zweiten Hohlraum 5 abgetrennt wird. Die vorhin beschriebenen Luftströme durchströmen jeweils einen getrennten ersten Hohlraum 4.

Durch einen Unterdruck, z.B. durch eine Vakuumpumpe 10 erzeugt, wird in einer Sammelleitung 6 und im zweiten Hohlraum 5 der Luft-Entfeuchtevorrichtung 1,2 ein Unterdruck erzeugt. Über diese Sammelleitung 6, welche an den zweiten Hohlraum 5 der Luft-Entfeuchtevorrichtungen 1,2 angeschlossen ist, wird diese feuchtere Luft abgeführt. Durch den Unterdruck wird ein Gemisch 100 aus Luft und Wasserdampf in den Kondenswasserabscheider 11 gesogen. Mittels dem Kondenswasserabscheider 11 wird das Gemisch 100 in Luft 101 und in Wasser 102 getrennt. Die Luft 101 wird an die Umgebung abgegeben und das Wasser 102 wird über eine Leitung 12 einer Druckerhöhungspumpe 13 zugeführt. Über einen weiteren Leitungsabschnitt 14 wird das unter Druck stehende Wasser 103 dem Kühlsystem 20 zugeleitet.

Im Kühlsystem 20, wie zum Beispiel gemäss EP 1 521 040 ausgeführt, wird das unter Druck stehende Wasser 103 mittels einer oder mehrer Düse(n) zerstäubt und reichert den entfeuchteten Luftstrom 55' mit Feuchtigkeit an. Dabei steigt die relative Feuchte der Abluft, und durch die aufzunehmende Verdampfungswärme sinkt die Temperatur des entfeuchteten Luftstromes 55' und es resultiert der gekühlte Luftstrom 55" . Überschüssiges Wasser wird an die Umwelt abgegeben.

Durch die Gewinnung von Kondenswasser 102 durch Entfeuchten eines Luftstromes 50' und/oder 55' und die anschliessende Rückführung in das Kühlsystem 20 wird ein ganz oder teilweise autarker Betrieb der Vorrichtung gemäss der vorliegenden Erfindung ermöglicht.

Durch Anordnen einer zusätzlichen (in den Zeichnungen nicht dargestellten) Luft-Entfeuchtevorrichtung kann weiteres Kondensat gewonnen werden. Die Vorrichtung ist dabei ohne den Hohlraum 4 ausgestaltet, die Membrane 3 grenzt also direkt an einen Luftstrom. Diese Vorrichtung ist besonders vorteilhaft, wenn die Vorrichtung auf einem Kraftfahrzeug oder einem Anhänger eines Kraftfahrzeugs angeordnet ist, wie zum Beispiel einem Wohnmobil, einem Wohnwagen, einem Lastkraftfahrzeug, einem Anhänger oder einem Flugzeug. Der Luftstrom ist in diesem Falle ein vorbeistreichender Luftstrom, welcher durch den Fahrtwind des Fahrzeuges erzeugt wird und somit wird weiteres Kondensat zum Einspritzen von der freien Umgebungsluft gewonnen.

Alle genannten Luftströme, ohne den vorbeistreichenden Luftstrom, werden in Leitungen geführt, welche dem Fachmann bekannt sind.

Die Anlage kann im Winter auch der Erwärmung und der Befeuchtung des Luftstromes 50, 50', 50" dienen. Der Luftstrom 55', 55'' wird dann im Kühlsystem 20 nicht abgekühlt. Im Wärmetauscher 40 kann demnach der Luftstrom 50 mittels wärmerer Abluft 55" aufgewärmt werden. Zudem wird der Abluft 55 in der zweiten Luft-Entfeuchtevorrichtung 2 Feuchtigkeit entzogen und über die Sammelleitung 6 in die erste Luft-Entfeuchtevorrichtung 1 gegeben. Über die erste Luft-Entfeuchtevorrichtung 1 wird der Luftstrom 50' mit Feuchtigkeit angereichert. Die Vorrichtung kann mit einer Wohnwagen- oder einer Kraftfahrzeug-Heizungsanlage kombiniert werden.

### Bezugzeichenliste

- 1: Luft-Entfeuchtevorrichtung
- 2: Luft-Entfeuchtevorrichtung
- 3: Wasser- und/oder wasserdampfpermeable Membran
- 4: Erster Hohlraum
- 5: Zweiter Hohlraum
- 6: Sammelleitung
- 10: Vakuumpumpe
- 11: Kondenswasserabscheider
- 12: Leitung
- 13: Druckerhöhungspumpe
- 14: Leitung
- 20: Kühlsystem
- 38: Grobpartikelfilter
- 39: Elektrofilter
- 40: Wärmetauscher
- 41: Ventilator
- 50: Aussenluft
- 50': gekühlter Luftstrom
- 50": entfeuchteter und gekühlter Luftstrom
- 51: Zuluft
- 55: Abluft
- 55': entfeuchteter Luftstrom
- 55": gekühlter Luftstrom
- 56: Fortluft
- 60: Raum
- 100: Gemisch aus Luft und Kondenswasser
- 101: Luft
- 102: Wasser
- 103: unter Druck stehendes Wasser

## Patentansprüche

1. Verfahren zur Kühlung eines ersten Luftstromes (50, 50', 50'', 51) mit den Verfahrensschritten des
- Entfeuchtens eines zweiten Luftstromes (55, 55', 55", 56),
- Einspritzens von Wasser in den entfeuchteten zweiten Luftstrom (55') zur Kühlung desselben,
- Durchführens des ersten (50) und des gekühlten zweiten Luftstromes (55'') durch einen Wärmetauscher zur Kühlung des ersten Luftstromes (50),
**dadurch gekennzeichnet, dass** das beim Schritt des Entfeuchtens des zweiten Luftstromes (55) gewonnene Kondensat beim Schritt des Einspritzens verwendet wird.

2. Verfahren nach Anspruch 1, **dadurch gekennzeichnet, dass** auch der gekühlte erste Luftstrom (50, 50', 50", 51) nachfolgend entfeuchtet und das gewonnene Kondensat beim Schritt des Einspritzens verwendet wird.

3. Verfahren nach Anspruch 1 oder 2, **dadurch gekennzeichnet, dass** weiteres Kondensat für den Schritt des Einspritzens durch ein Entfeuchten von freier Umgebungsluft gewonnen wird.

4. Vorrichtung zur Kühlung eines ersten Luftstromes (50, 50', 50", 51) mit einer Luft-Entfeuchtevorrichtung (2) für mindestens einen zweiten Luftstrom mit einer wasser- und/oder wasserdampfpermeablen Struktur (3, 4), die über Pumpenmittel (13, 10) mit einem Kondensatabscheider (11) verbunden ist, mit einem Kühlsystem (20), durch das der entfeuchtete zweite Luftstrom durchführbar ist, und mit einem Wärmetauscher (40), durch den die beiden Luftströme zur Abkühlung des ersten Luftstromes hindurchführbar sind, **dadurch gekennzeichnet, dass** das aus dem Kondensatabscheider (11) gewonnene Wasser zum Einspritzen in das Kühlsystem (20) geführt wird.

5. Vorrichtung nach Anspruch 4, **dadurch gekennzeichnet, dass** mit einer weiteren Luft-Entfeuchtevorrichtung (1) weiteres Kondensat aus dem gekühlten ersten Luftstrom (50, 50', 50'', 51) gewonnen wird.

6. Vorrichtung nach Anspruch 4 oder 5, **dadurch gekennzeichnet, dass** mit einer zusätzlichen Luft-Entfeuchtevorrichtung weiteres Kondensat aus der vorbeistreichenden - mit oder ohne Ventilatorunterstützung - Umgebungsluft gewonnen wird.

7. Vorrichtung nach Anspruch 6, **dadurch gekennzeichnet, dass** die Vorrichtung auf einem Fahrzeug angeordnet ist und dass der Luftstrom entlang der zusätzlichen Luft-Entfeuchtevorrichtung durch ein Bewegen des Fahrzeugs erzeugbar ist.

8. Vorrichtung nach Anspruch 7, **dadurch gekennzeichnet, dass** das Fahrzeug ein Kraftfahrzeug oder ein Anhänger eines Kraftfahrzeuges, insbesondere ein Wohnmobil, ein Wohnwagen, ein Lastkraftfahrzeug, ein Anhänger, ein Schiff oder ein Flugzeug ist.
